**Europäisches Patentamt**

(19) **European Patent Office**

**Office européen des brevets**

(11) Veröffentlichungsnummer: **0 021 517**
**B1**

(12) # EUROPÄISCHE PATENTSCHRIFT

(45) Veröffentlichungstag der Patentschrift:
16.05.84

(51) Int. Cl.³: **F 16 F  15/00, F 16 M  7/00**

(21) Anmeldenummer: **80200558.7**

(22) Anmeldetag: **16.06.80**

(54) Einrichtung zum Verstimmen der kritischen Drehzahl von Maschinen.

(30) Priorität: **03.07.79  CH 6190/79**

(73) Patentinhaber: **BBC Aktiengesellschaft Brown, Boveri & Cie., Haselstrasse, CH-5401 Baden (CH)**

(43) Veröffentlichungstag der Anmeldung:
**07.01.81 Patentblatt 81/1**

(72) Erfinder: **Schluchter, Martin, Wyden 15, CH-5242 Birr (CH)**
Erfinder: **Schröder, Paul, Obere Kirchzelg 7, CH-5430 Wettingen (CH)**

(45) Bekanntmachung des Hinweises auf die Patenterteilung:
**16.05.84 Patentblatt 84/20**

(84) Benannte Vertragsstaaten:
**CH DE FR IT LI**

(56) Entgegenhaltungen:
**AT - B - 295 250**
**DE - A - 2 346 618**
**DE - B - 1 249 018**
**FR - A - 1 135 312**
**FR - A - 2 044 257**
**FR - A - 2 376 342**
**US - A - 2 412 499**
**US - A - 3 659 814**
**US - A - 3 774 730**
**US - A - 4 050 665**

BUNDESDRUCKEREI BERLIN

Einrichtung zum Verstimmen der kritischen Drehzahl von Maschinen

Die vorliegende Erfindung betrifft eine Einrichtung gemäß dem Oberbegriff des Anspruchs 1.

Es sind Kraft- und Arbeitsmaschinen, insbesondere elektrische Maschinen allgemein bekannt, die vorzugsweise mittels Flansch auf einem Fundament oder Zwischenstücken aufgestellt sind. Bei diesen Maschinen soll man die kritische Drehzahl verhindern, die für die Konstruktion gefährlich werden könnte. Wie bekannt, ist die kritische Drehzahl die Drehzahl, die mit den Eigenschwingungszahlen rotierender Körper zusammenfällt, und ist besonders dann gefährlich, wenn nicht alle Teile gut ausgewuchtet sind.

Aus der DE-A-2 346 618 ist eine Vorrichtung zur Dämpfung der Schwingungen von Maschinen, wie Hämmern, Pressen, Werkzeugmaschinen usw., sowie von deren Teilen bekannt, wobei die Vorrichtung eine oder mehrere Auf- oder Einlagen aus elastischem Material aufweist. Diese sind an und/oder in den Wandungen der Maschinen sowie deren Teilen mittels Spanngliedern an- bzw. einpreßbar. So wird z. B. bei einem Hammerständer der Fußteil beidseits mit einer Bohrung versehen, in welche wechselweise übereinander Scheiben aus elastischem und unelastischem Material eingebracht sind. Die aufeinanderliegenden Scheiben werden von einem Spannbolzen durchsetzt, welcher die Scheiben so miteinander verspannt, daß die Scheiben aus elastischem Material sich fest an die umgebenden Wandungen der Bohrung anlegen.

Bei einer Einrichtung gemäß dem Oberbegriff des Anspruchs 1 (DE-A-2 346 618) liegt der Erfindung die Aufgabe zugrunde, eine Einrichtung zum Verstimmen der kritischen Drehzahl von vertikalen Maschinengruppen zu schaffen, bei der die Aufstellungselastizität mit einfachen technischen Mitteln gewählt und auch zusätzlich angepaßt werden kann, so daß gefährlich hohe Vibrationen der Maschine verhindert werden.

Die Aufgabe der Erfindung wird durch die im kennzeichnenden Teil des Anspruchs 1 angegebenen Merkmale gelöst.

Der Vorteil der Erfindung liegt darin, daß die austauschbaren elastischen, in den Ausnehmungen gelagerten Elemente es ermöglichen, die Aufstellungselastizität auch bei schon montierten Maschinengruppen schnell und einfach zu verändern und somit genügend Resonanzabstand zu erhalten und die Schwingungsamplituden über die Dämpfungseigenschaften der elastischen Elemente zu verkleinern.

Vorteilhafte Weiterbildungen der Erfindung sind in den Unteransprüchen beschrieben. Die Ausgestaltung nach Anspruch 2 sichert die Lage der elastischen Elemente. Die Ausführungsform gemäß Anspruch 3 ermöglicht, durch die Wahl des Materials das Verstimmen günstig zu beeinflussen. Die Elemente können z. B. aus Stahl, Messing oder aus mit Glasfasern verstärktem Kunststoff bestehen. Es ist selbstverständlich, daß auch einige Ausnehmungen leer bleiben oder nur teilweise mit den elastischen Elementen ausgefüllt sein können. Sie können massiv oder lamelliert sein.

Die Ausgestaltung nach Anspruch 4 erleichtert den Austausch der elastischen Elemente.

Die Erfindung wird im folgenden an Hand schematischer Zeichnungen näher erläutert. Gleiche Teile sind in beiden Zeichnungen mit denselben Bezugsziffern versehen. Es zeigt

Fig. 1 einen teilweisen Schnitt durch eine beispielsweise erfindungsgemäße Einrichtung, bei der zwei elastische austauschbare Elemente in einem Flansch fixiert sind, und

Fig. 2 den Schnitt II-II aus Fig. 1.

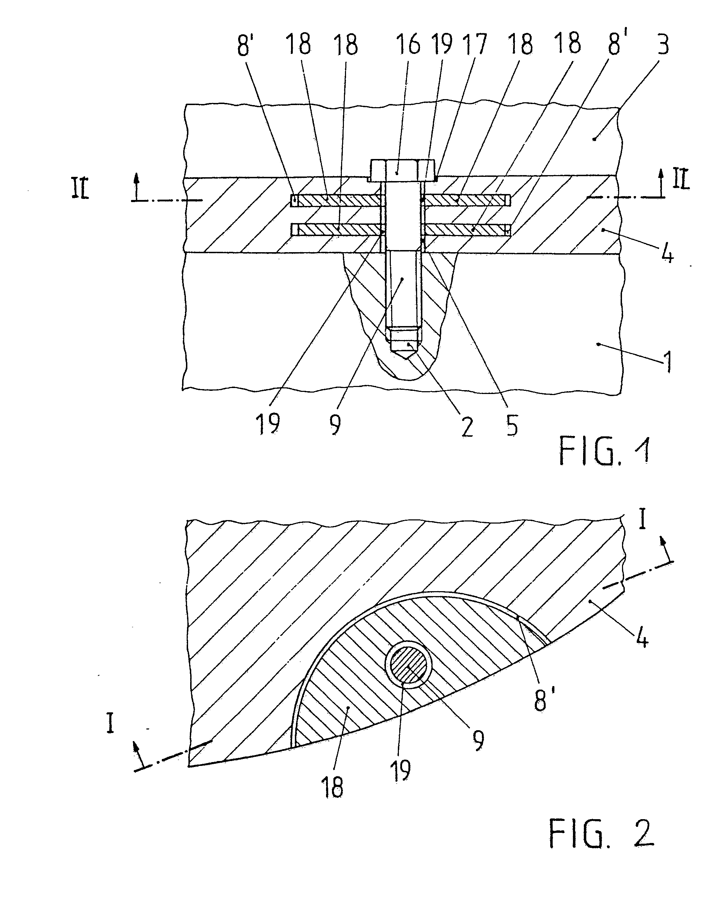

Gemäß Fig. 1 und 2 ist ein Fundament 1 mit einer Bohrung 2 versehen. Ein Gehäuse 3 weist einen Flansch 4 auf, der als Befestigungsteil des Gehäuses 3 dient. Im Flansch 4 sind zwei Ausnehmungen 8' ausgeführt. In diesen sind elastische austauschbare Elemente 18 angeordnet. Sie sind als Einschiebestücke ausgeführt und mit Bohrungen 19 versehen, die für die Schraube 9 bestimmt sind. Zum Einschrauben der Schraube 9 dient der Kopf 16, der in eine Ausnehmung 17 in der Oberfläche des Flansches 4 teilweise eingelassen ist. Die Schraube 9 verbindet den Flansch 4 mit dem Fundament 1.

Die Einschiebestücke 18 bestehen aus Stahl und sind massiv ausgebildet. Sie können auch lamelliert ausgebildet werden oder aus einem anderen Material bestehen. Durch die Wahl des Materials und der Ausgestaltung der Einschiebestücke 18 kann man die Aufstellungselastizität des Gehäuses 3 und somit der Maschine auch zusätzlich anpassen. Es ist selbstverständlich, daß mehrere Einrichtungen gemäß dem Erfindungsgegenstand am Umfang der Maschinengruppen angeordnet sein können. Die Dicke der Einschiebestücke 18 entspricht der Dicke der Ausnehmungen 8'.

Im gezeigten Beispiel sind zwei Ausnehmungen 8' dargestellt. In einigen Fällen reicht auch eine Ausnehmung 8' aus, man kann jedoch auch drei oder mehrere verwenden.

Bezeichnungsliste

1   Fundament
2   Bohrung im Fundament 2
3   Gehäuse
4   Flansch — Befestigungsteil
8'  Ausnehmung
9   Befestigungselement, Schraube, Gewindebolzen
16  Kopf der Schraube 9
17  Ausnehmung für den Kopf 16
18  Einschiebestücke — elastische Elemente mit anpaßbarer Federeigenschaft
19  Bohrungen in den Einschiebestücken 18

## Patentansprüche

1. Einrichtung zum Verstimmen der kritischen Drehzahl von vertikalen Maschinengruppen, wobei in wenigstens einem Teil der Maschinengruppe in Ausnehmungen (8') austauschbare, plattenförmige elastische Elemente (18) mit anpaßbarer Federeigenschaft gelagert sind und mittels Spanngliedern (9) an Teilen der Maschinengruppe anpreßbar sind, dadurch gekennzeichnet, daß die Ausnehmungen (8') seitlich in einem flanschartigen Befestigungsteil (4) der Maschinengruppe angeordnet sind, in welche die als Einschiebestücke (18) ausgebildeten Elemente mit einer Dicke, die der Höhe der Ausnehmungen entspricht nach Lösen der Spannglieder (9) seitlich herausnehmbar sind.

2. Vertikale elektrische Maschine nach Anspruch 1, dadurch gekennzeichnet, daß die austauschbaren elastischen Elemente (18) mit wenigstens einer Bohrung (19) versehen sind, welche mit der Bohrung im Befestigungsteil (4) fluchtet, und durch die ein Befestigungselement, vorzugsweise eine Schraube (9), geführt ist.

3. Vertikale elektrische Maschine nach Anspruch 1 oder 2, dadurch gekennzeichnet, daß die austauschbaren elastischen Elemente (18) aus verschiedenen Materialien bestehen und/oder verschiedene Federeigenschaften aufweisen.

4. Vertikale elektrische Maschine nach Anspruch 1 oder 2, dadurch gekennzeichnet, daß die austauschbaren elastischen Elemente (18) aus einzelnen Lamellen aufgebaut sind.

## Claims

1. Device for deresonating the critical speed of rotation of vertical machine assemblies, exchangeable plate-shaped resilient elements (18) being mounted with adjustable resilient properties in recesses (8') in at least a part of the machine assembly, which elements can be pressed by means of clamping members (9) against parts of the machine assembly, characterised in that the recesses (8) are arranged laterally in a flange-type fixing part (4) of the machine assembly, in which the elements constructed as insertion pieces (18) and having a thickness corresponding to the height of the recesses can laterally be inserted and, after slackening the clamping members (9), taken out.

2. Vertical electrical machine according to Claim 1, characterised in that the exchangeable resilient elements (18) are provided with at least one bore (19) which is aligned with the bore in the fixing part (4) and through which a fixing element, preferably a screw (9), is passed.

3. Vertical electrical machine according to Claim 1 or 2, characterised in that the exchangeable resilient elements (18) consist of different materials and/or have different spring properties.

4. Vertical electrical machine according to Claim 1 or 2, characterised in that the exchangeable resilient elements (18) are built up from individual lamellae.

## Revendications

1. Dispositif pour modifier la vitesse de rotation critique de groupes de machines verticales selon lequel, dans au moins une partie du groupe de machines, des éléments élastiques plats remplaçables (18) à propriétés de ressort adaptables sont montés dans des évidements (8') et peuvent être pressés au moyen d'éléments de serrage (9) contre des parties du groupe de machines, caractérisé en ce que les évidements (8') sont ménagés latéralement dans un élément de fixation en forme de bride (4) du groupe de machines, dans lequel les éléments ayant la forme de pièces insérées (18) d'une épaisseur correspondant à la hauteur des évidements peuvent être retirés latéralement après desserrage des éléments de serrage (9).

2. Machine électrique verticale suivant la revendication 1, caractérisé en ce que les éléments élastiques remplaçables (18) présentent au moins une forure (19) qui est disposée dans le prolongement de la forure prévue dans l'élément de fixation (4) et qui est traversée par un élément de fixation de préférence une vis (9).

3. Machine électrique verticale suivant la revendication1 ou 2, caractérisé en ce que les éléments élastiques remplaçables (18) sont faits de diverses matières et/ou présentent diverses propriétés de ressort.

4. Machine électrique verticale suivant la revendication 1 ou 2, caractérisé en ce que les éléments élastiques remplaçables (18) sont faits de lames individuelles.

FIG. 1

FIG. 2